# EUROPEAN PATENT APPLICATION

(11) **EP 0 859 314 A2**
(43) Date of publication of application: **19.08.1998**
(21) Application number: 97122365.6
(22) Date of filing: 18.12.1997
(51) Int. Cl.: G06F 9/44

(54) **Distributed make methods, apparatus, and computer program products**

(30) Priority: 18.12.1996 US 769621
(71) Applicant: SUN MICROSYSTEMS, INC., Palo Alto, California 94303 (US)
(72) Inventor: Nguyen, Mitchell H., New York, NY 10003 (US); Walton, Wilmer, Gilroy, California 95020 (US)
(74) Representative: Kahler, Kurt, Dipl.-Ing.

(57) **Abstract**

Distributed make methods, apparatus, and computer program products enable concurrent execution of make jobs in distributed internetworked data processors. A monitor process receives make jobs determined by a make file and distributes the jobs for processing to an associated plurality of job execution processes.

## Description

### CROSS-REFERENCE TO RELATED APPLICATION

This application is related to a patent application filed on even date herewith on Job Distribution and Load Balancing Methods, Apparatus, and Computer Program Products, U.S. Patent Serial No. , by Mitchell Nguyen. The related application is hereby expressly incorporated herein by reference in its entirety(see Appendix D).

### COPYRIGHTS IN PATENT MATERIALS

Portions of this Patent document contain material subject to copyright protection. The copyright owner has no objection to facsimile reproduction of the Patent document after grant as it appears in the U.S. Patent and Trademark Office files and records, but otherwise reserves all rights relating thereto.

### FIELD OF THE INVENTION

This invention relates to methods, apparatus, and computer program products and more particularly to job distribution methods and systems on plural computing nodes.

### BACKGROUND OF THE INVENTION

The UNIX environment includes a bundled "make" utility which runs in the UNIX shell, to enable software having multiple source files to be rebuilt into executable or other final form during maintenance. Software maintenance includes updating and modifying software files and then rebuilding files and code dependent upon the changed files. Software being maintained typically includes multiple independent software modules (*e*.*g*., .o's). According to the bundled UNIX "make" utility, rebuilding or "build" is accomplished serially by recompiling one source module at a time and then relinking the resultant object files into an executable software product which can be shipped to the customer. According to the prior current source files can be recompiled in parallel at a selected local data processing machine. Appendix C below provides background of details of a current implementation of make.

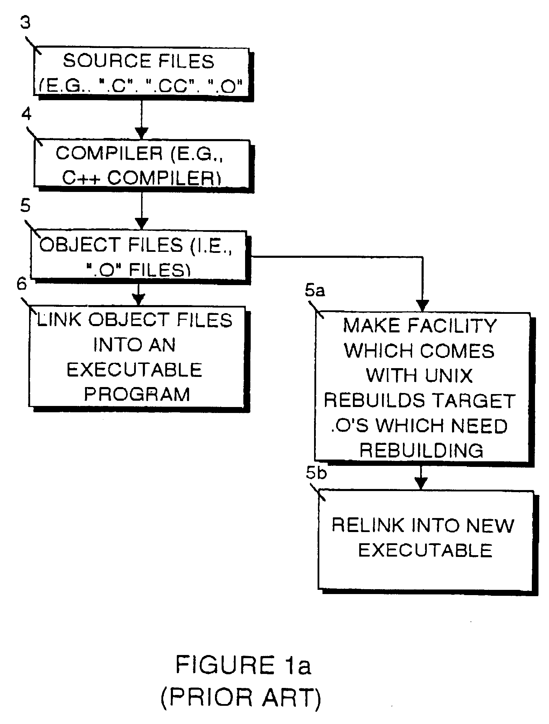

Figure 1a illustrates a current process of running make. In particular, make identifies 3 source files to be used in rebuilding, compiles 4 the source files serially or in parallel at a single processing node with a suitable compiler, and links 5 the resultant object files into a new rebuilt executable program. A C++ compiler is used to recompile modified .cc object files. A C compiler is used to recompile modified .c object files.

The make utility is useful but complicated, because of the technical requirement to quickly process many make jobs. The complexity and the workload of the make utility reduces speed of performance. Accordingly, it would be desirable to develop make methods, apparatus and computer program which speed the build process and enables more speedy and effective software maintenance and file modification operations.

### SUMMARY OF THE INVENTION

The invention is defined in claims 1, 11, 12 and 13, respectively.

According to the present invention, a monitor process for distributing make jobs is run on a selected data processing node and at least a single job execution process is run on one or more separate data processing nodes. Further according to the present invention, selected make jobs are sent to and distributed by the monitor process for execution at the one or more job execution processes. The jobs are executed by the job execution processes to which they are sent, according to the present invention. The make jobs to be processed can be communicated in groups to applicable job execution processes and particular data processing nodes. A dmake configuration file is read to determine which data processing nodes are available for job distribution. Comunication pipes are established according to the present invention to communicate between the monitor process and the job execution processes. The communication between monitor and job execution processes is employed for job distribution and status messaging regarding the results of processing particular make jobs according to the present invention.

Further according to the present invention, a computer program product enables distributed processing of make jobs with a computer program code mechanism having code devices for establishing job monitor and job execution processes on diverse data processing nodes. The computer program product further includes a code device to enable communication of jobs and job reports between monitor and execution processes.

Further according to the present invention, a computer apparatus initiates job distribution to remote data processing systems by being configured to identify and distribute make jobs for execution. The apparatus is configured according to one embodiment to perform some jobs locally. According to another embodiment, all of the jobs are sent to non-local data processing systems. According to yet another embodiment, all the jobs are sent to a simple remote data processing system.

### BRIEF DESCRIPTION OF THE DRAWINGS

Figure 1a is a flow diagram for updating selected targets according to a current UNIX build process which recompiles outdated source files and relinks resultant up-to-date object files into a current executable software program;
Figure 1b is a block diagram of a known data processing system on which software according to the present invention can be implemented;
Figure 1c is a diagram of a known network of data processing nodes on which the present invention is implemented to process make jobs on separate data processing nodes;
Figure 1d is a block diagram of the known architecture of a make file;
Figure 1e is a block diagram of the general functionality of a distributed make engine according to the present invention;
Figure 1f is a flow chart of a method of distributed make according to an embodiment of the present invention;
Figure 1g is a flow chart of an embodiment of the present invention in which remote server execution processes are pre-installed at selected remote hosts;
Figure 1h is a flow chart of a method according to the present invention;
Figure 1i is a flow chart of a job distribution method according to an embodiment of the present invention in which jobs are distributed first according to data processing capacity and thereafter alternatingly among nodes of equal processing capacity;
Figure 2a shows a file dependency tree determined by parsing a make file for a selected executable software program;
Figure 2b is a flow chart of the method of the known UNIX make facility;
Figure 3a shows the architecture of a distributed make system according to a first embodiment of the present system;
Figure 3b shows the architecture of a distributed make according to a second embodiment of the present system;
Figure 3c is a diagram of the architecture of pipe communications between monitor and execution processes according to the present invention;
Figure 3d is a diagram of the architecture of distributed make according to the present invention;
Figure 3e is a diagram of the architecture of the functionality of a remote execution monitor process according to the present invention;
Figure 3f is a diagram of the architecture of a remote execution monitor server process according to the present invention;
Figure 4 is a flow chart of a method according to the present invention; and
Figure 5 is a further flow chart of a method according to the present invention.

### DETAILED DESCRIPTION OF A PREFERRED EMBODIMENT

Distributed make is described in a manual page at Appendix A, and in a written description at Appendix B, attached hereto. These two appendixes provide information on how to make and use distributed make. By way of introduction, distributed make methods, apparatus, and computer program products, according to the present invention, significantly increase processing speeds in build operations, as will be shown in detail below. This enables more effective software revision and maintenance, distributed make (*i*.*e*., "dmake") distributes jobs derived from analysis of a make file over plural networked computer processing nodes with a job distribution facility which is called a remote execution monitor process when it runs. The remote execution monitor process runs on a selected first processing node. Available local and remote data processing nodes are determined in a run-time configuration file. Jobs are allocated in one instance, first to the data processing node which has the greatest job-handling capacity, until it is sufficiently loaded that its remaining job-handling capacity is equal to the job-handling capacity of one or more other data processing nodes. Jobs are alternatingly assigned to data processing nodes having similar current job-handling capacities. Jobs are remotely processed by remote execution server processes which are created on particular remote data processing nodes, to which one or more jobs are assigned for processing. Both remote and local hosts can be selected to process jobs. When dmake is invoked by a user, the UNIX operating system runs a dmake process which parses the make file and builds a dependency tree which describes the interrelationships of source and object files to be linked into an executable program. From the dependency tree, distributed make determines which files need to be updated, which of them can be updated, recompiled and otherwise processed in parallel, and which files need to be linked to build a target executable program. The particular recompilations and linkages are examples of jobs which are assigned for processing at remote or local data processing nodes. According to one embodiment of the present invention, a remote execution monitor process is started up by the dmake process to parse a run-time configuration file created by the user. This file lists data processing nodes available for job distribution and processing according to the present invention. Particular jobs from a first group of jobs are then received by the remote monitor process from the dmake process and distributed to available data processing nodes, whether local or remote. When the remote monitor process receives processing results from each earlier group of jobs, it reports the results to the dmake process. The remote monitor process then loops and listens for further incoming dmake jobs and for results of processing the preceding group of jobs. When the remote monitor process receives processing results from each earlier group of jobs, it reports the results to the dmake process. Once the dmake process has reported results for all prior jobs, it will distribute the next group of jobs.

According to one embodiment of the present invention, the remote monitor process, the remote execution server process, and the dmake process communicate through pipe connections. The pipes between the processes are conventionally created to enable each process to read and write with respect to the other. According to one embodiment of the present invention, once an execution process is in operation at a selected data processing mode, it will send a message to the monitor process indicating its readiness to receive jobs for execution. Each execution process will then loop and listen for jobs on its designated port connections with the monitor process.

According to the present invention, when an execution process receives a job message from the monitor process, it executes the commands in the job message, and communicates a result message to the monitor process upon completing job execution. Once the monitor process runs out of jobs to distribute to the execution processes, or if it has run out of data processing node capacity to process jobs, it will loop and listen for result messages from the execution processes. The monitor process will pass the results of each job to the dmake process, according to the present invention.

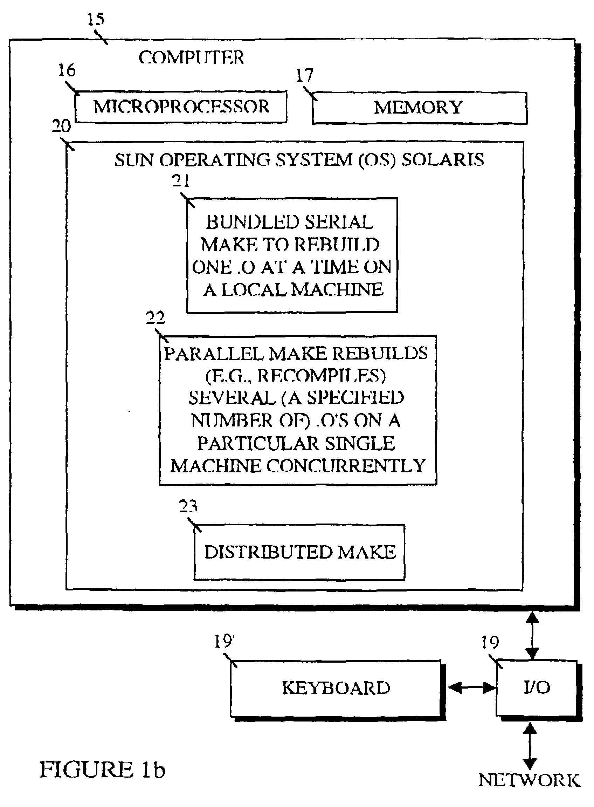

Figure 1b is a block diagram of a data processing system 15 on which software according to the present invention can be implemented. Data processing system 15 particularly includes an input/output (I/O) section 16a, a central processing unit (CPU) 16b, and a memory section 16c. CPU 16b receives information for data processing from memory section 16c and from input/output section 16a. Connected to input/output section 16a are a keyboard 15a, a monitor 15b, a storage unit 15c, and a drive 15d for operating a medium 15e encoded with a computer program and data 15f in accordance with the present invention. Further connected to input/output section 16a is a network 15g including a plurality of data processing nodes (not shown). Storage unit 15c may be a mass storage unit for data such as a magnetic disk or optical storage device. Drive 15d can be a computer program product reader such as a floppy disk, optical drive, or a CD-ROM drive. Medium 15e can be a magnetic or optical medium for storing information readable by drive 15d. CPU 16b may run an operating system such as a Sun Microsystems Solaris operating system. The operating system can be loaded on memory 16c or storage unit 15c or on a combination thereof, to provide instructions for CPU operations. The present invention operates with different forms of make to rebuild object files needing to be rebuilt. Rebuilding is required after the user has modified a file on which other files depend. In particular, according to the prior art, bundled serial make is used to rebuild one object file (*i*.*e*., ".o") at a time serially on a local machine. According to another version of the prior art, parallel make rebuilds (*e*.*g*., recompiles) several object files (*i*.*e*., a specified number of ".o's") on a particular single machine concurrently. According to the present invention, however, dmake is distributed over at least two computers or remote hosts.

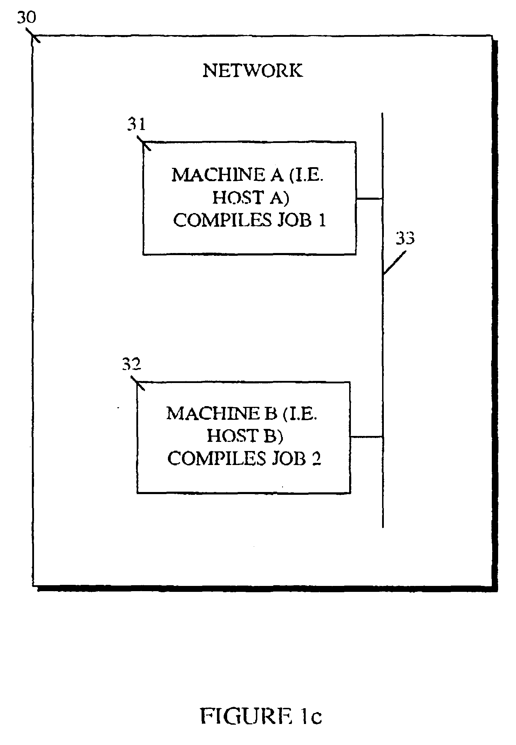

Figure 1c shows an embodiment of the present invention in which distributed make is operating in a network 30 having at least first and second data processing nodes, *i*.*e*., machines 31, 32 which respectively compile first and second updated files as respective first and second dmake jobs. Network 30 includes first and second distributed machines 31 and 32, as well as network connection 33 therebetween. Each machine 31, 32 is a computer programmed with a suitable operating system, *e*.*g*., Solaris, and can be referred to as a data processing node or host.

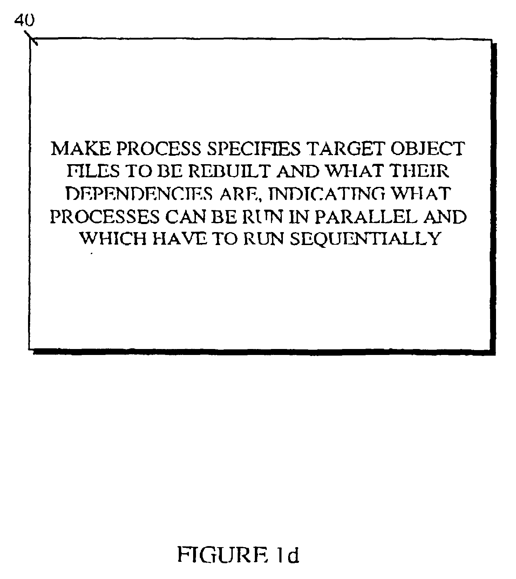

Figure 1d is a block diagram specifying a known make file architecture. In particular, a make file 40 specifies target object files to be rebuilt and what the file dependencies of the object files are. The architecture of the make file permits determination of what jobs can be run in parallel and which must be run in sequential dependency upon each other.

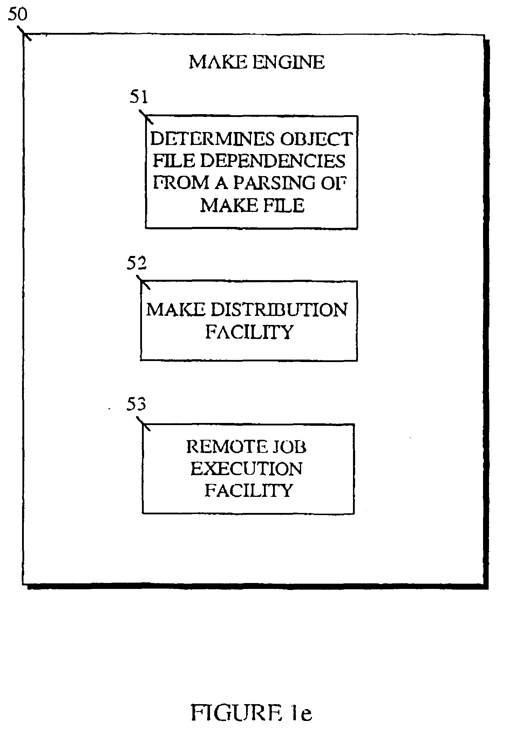

Figure 1e is a block diagram of a distributed make (*i*.*e*., dmake) engine 50, according to the present invention. Dmake make engine 50 particularly determines 51 object file dependencies by parsing a make file 40 associated with a particular executable software program being revised or maintained. According to the present invention, dmake engine 50 includes a facility 52 which distributes jobs specified in the selected make file subject to distributed processing, and executes 53 the jobs at remote processing nodes, as will be discussed in detail below in connection with separate monitor and execution processes.

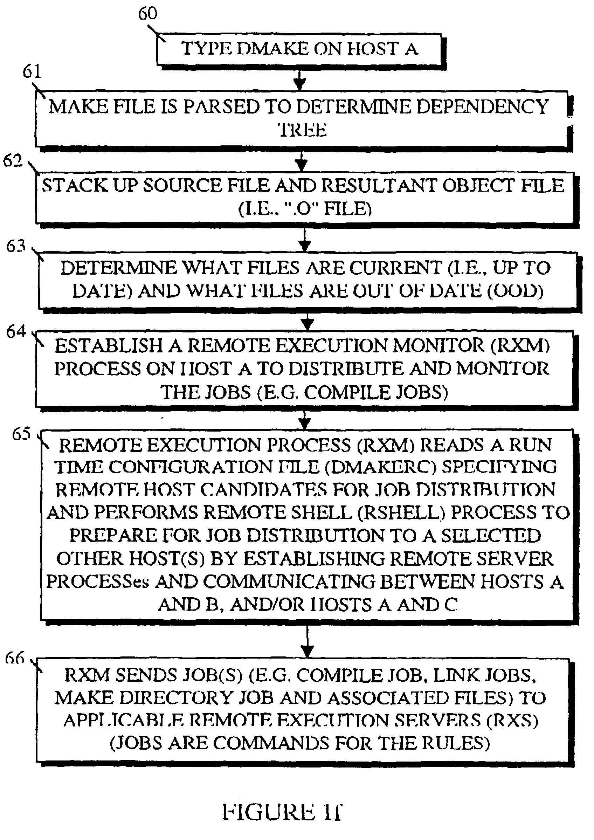

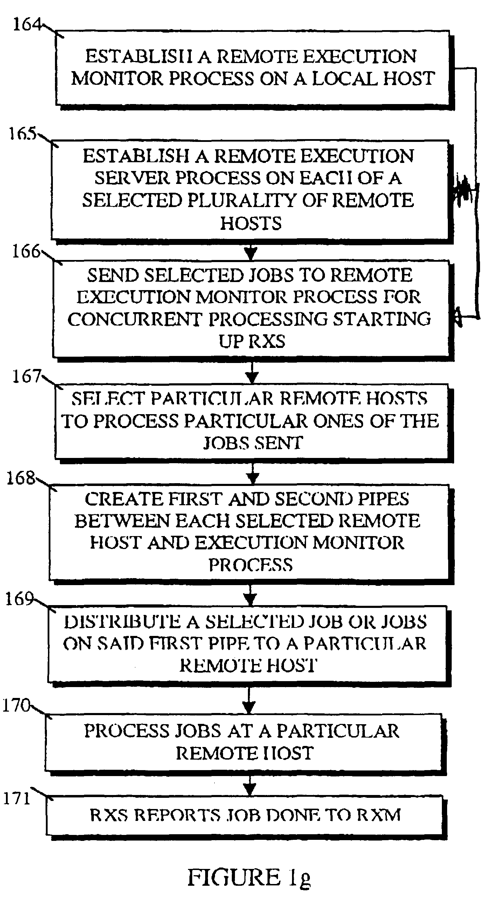

Figure 1f is a flow chart of one embodiment of a method according to the present invention for distributing make jobs over a plurality of data processing nodes. According to this embodiment, running the dmake code starts a dmake process which identifies dmake jobs with reference to a user-generated make file. The dmake process then starts up a monitor process which distributes the jobs to available data processing nodes and then monitors the accomplishment of the distributed jobs. Job distribution includes running service processes at the available data processing nodes, which are in communication with the dmake monitor process. According to one embodiment, individual job service processes are initiated at available data processing nodes using the UNIX rsh command. As will be seen, independent job service processes can be started in a number of ways, according to different embodiments of the present invention. According to one embodiment, a local job service process is started up on the local data processing node on which the job monitor process is resident. According to another embodiment to be discussed in detail below, one or more remote processes can be initiated or awakened based upon pre-installed software and/or established resident daemons located at selected data processing nodes. According to yet another embodiment of the present invention, the underlying dmake code provides that the dmake monitor process which runs at a selected data processing node undertakes to execute a precoded UNIX rsh command repeatedly with reference to selected data processing nodes to which dmake jobs are to be distributed. Execution of the rsh command is a local process which sends a message to a designated data processing node at a predetermined or so-called "well known" part thereof. According to one embodiment, execution of the UNIX rsh command thus starts a local process which invokes shell processes or direct command implementation processes in remotely networked data processing nodes. In particular, a dmake process is started by a user typing 60 "dmake" on the keyboard of first data processing node called host A for convenience. Next, a make file associated with selected software in revision or maintenance is parsed 61 to determine a dependency tree of component files which are interlinked during construction of the target executable software program being maintained. Further, the name of the source files and corresponding object files (".o's") from the dependency tree are stacked 62 in a queue. A determination is made 63 as to what files are current (*i*.*e*., up to date) and what files are out of date (OOD). Then, a remote execution monitor (rxm) process is established 64 on local host A to distribute and monitor jobs (*e*.*g*., compile jobs) at remote hosts. Next, a remote execution monitor (rxm) process reads 65 a runtime configuration file (dmakerc) which specifies remote hosts for job distribution, and starts up a local rsh process to prepare for distribution of jobs to selected other hosts. The rsh process in turn sends a message to a selected remote host with a package of predetermined jobs to be performed at the remote host. According to one embodiment of the present invention, an administrative program or daemon at the remote processing node monitors a well-known port connecting the node to the network, watching for messages directed at it. When the monitoring daemon receives the message, it starts a new process to run the jobs contained in the message. According to one embodiment, the server daemon for the Berkeley rsh command is used to establish remote processes to execute commands received by message from the local host on which the dmake monitor process is resident. The server daemon cooperating with the local host is resident on the remote data processing node. According to the embodiment of Figure 1f, the dmake monitor process sends 66 jobs (*e*.*g*., compile and link jobs and associated files) to applicable remote execution server (rxs) processes which have been established. For each remote processing node in which a remote process is started by action of the server daemon responding to a message containing jobs and commands from the rsh process on the local host, a separate rsh process is started up by the dmake monitor process.

Figure 1g is a flow chart of another embodiment of the present invention in which a remote execution monitor process and plural remote execution processes are cooperatively run at respective local and remote hosts. As in other embodiments, a remote execution monitor process is established 164 on a selected local host by execution of dmake code. Additionally, a remote execution server process is established 165 (*i*.*e*., "pre-established") on each of a selected plurality of remote hosts. Then, selected jobs are sent 166 to the remote execution monitor process for concurrent processing. Next, particular remote hosts are selected 167 to process particular ones of the jobs sent to the local host. Additionally, first and second pipes are created 168 between each selected remote host and the execution monitor process. The selected jobs are then distributed 169 by direct pipe communication to particular remote data processing nodes, *i*.*e*., hosts. The jobs are then processed 170 with respective remote server processes which have been initiated at the various remote data processing nodes. Each remote server process reports the results of its job processing to the dmake monitor process running on the local data processing node. Completion of each assigned job is reported 171 to the monitor process on the local data processing node.

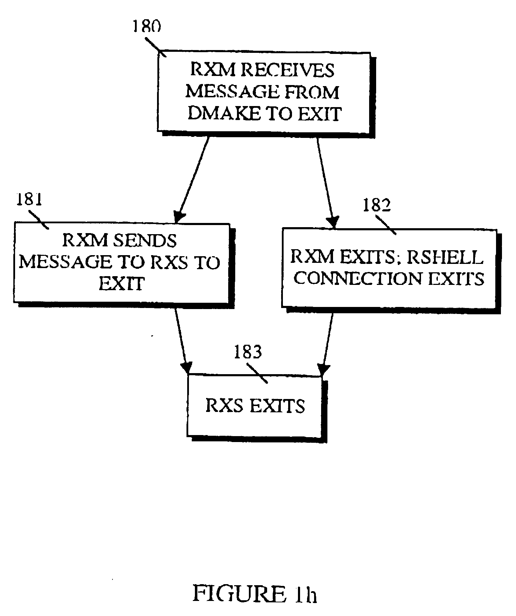

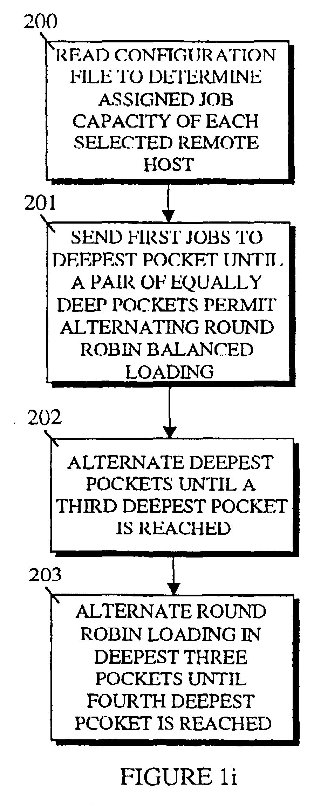

Figure 1h is a flow chart of remote processing termination methods according to the present invention in which the persistence of the remote processing terminates with exit from remote monitor and execution processes. In particular, according to one embodiment of the present invention, the monitor process 180 receives a termination message from the dmake process to exit processing operation upon completion of job execution. Then, the monitor process sends 181 a termination message to the remote execution processes to exit. Alternatively, the monitor process exits independently, causing the connection between rsh and remote execution processes to exit. Finally, the various remote execution processes exit, thereby effecting an end to the persistence of the various remote execution processes.

Figure 1i is a flow chart of job distribution among plural hosts according to the data processing capacity of particular remote data processing nodes to which jobs are transmitted. In particular, a remote configuration file is read 200 to determine the capacity of each available remote data processing node. The first jobs from the monitor process are then sent 201 to the remote execution process associated with the data processing node having the greatest data processing capacity. The loading of the greatest capacity node is repeated until its capacity is diminished to a level making it comparable in loading to the second greatest capacity node. Once the second level is reached, additional jobs are distributed alternatingly 202 until the diminished capacity of the two data processing nodes reaches the level of the third level capacity node. The process then repeats itself with rounds of distribution 203 among the three deepest pockets until the fourth deepest pocket is reached, and so on.

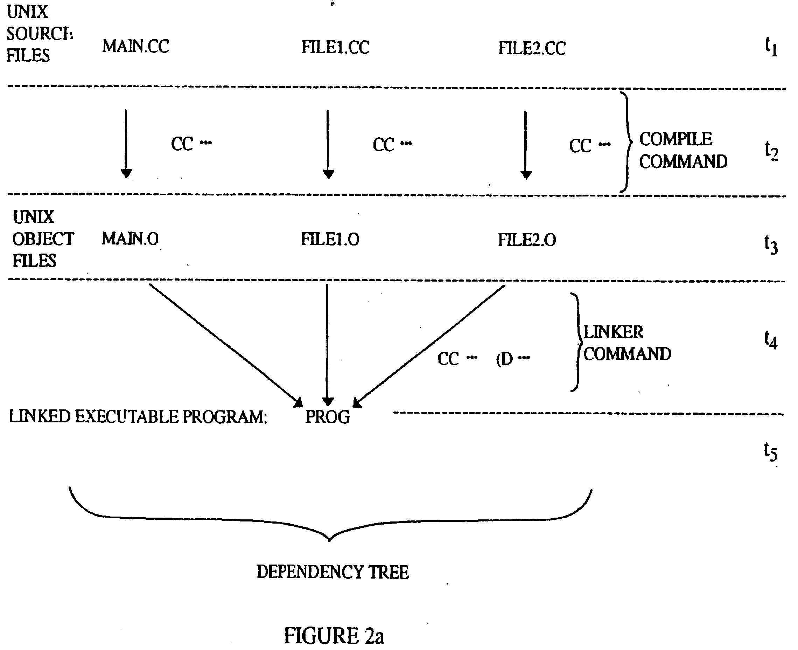

Figure 2a shows a file dependency tree according to which parallel processing of groups of jobs can be evaluated. The figure shows a plurality of C++ source files (*e*.*g*., main.cc, file1.cc, and file2.cc) being considered at time t₁. These C++ source files are compiled (cc...) in parallel at time t₂, producing corresponding object files, respectively main.o, file7.o, and file2.o, at time t₃. Then, at time t₄, a linker is applied to the indicated .o files to produce a linked executable software program ready for operation at time t₅. The three compile jobs on main.cc file1.cc, and file2.cc are independent. Thus, the jobs can be transmitted by the dmake process to the monitor process for parallel, distributed performance at separate remote data processing nodes. However, the target executable software program prog is dependant upon completion of the three compile jobs. Thus, according to the present invention, the dmake process groups the three compile jobs together for one transmission to the monitor process and sends the link job separately to prevent parallel processing of the link job with the compile jobs at distributed nodes.

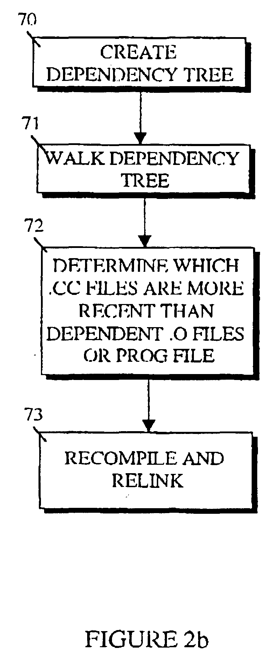

Figure 2b is a flow chart of a method according to the prior art, in which a dependency tree is created 70 by the known make process, and the dependency tree is walked 71 or followed to ensure that all dependent files were appropriately revised after modification of the files upon which they depend. The prior art method includes determining 72 which, if any, of certain source, *i*.*e*., .cc, files have more recently been modified by programming changes or modifications than their dependent object, *i*.*e*., .o, files or prog files. Finally, recompilation (for example) is performed 73 on the modified source files to produce updated object files to be relinked into the target executable software program associated with the underlying file producing the dependency tree. While this method is not new, the distribution of job processing is accomplished on distributed processing nodes according to the present invention.

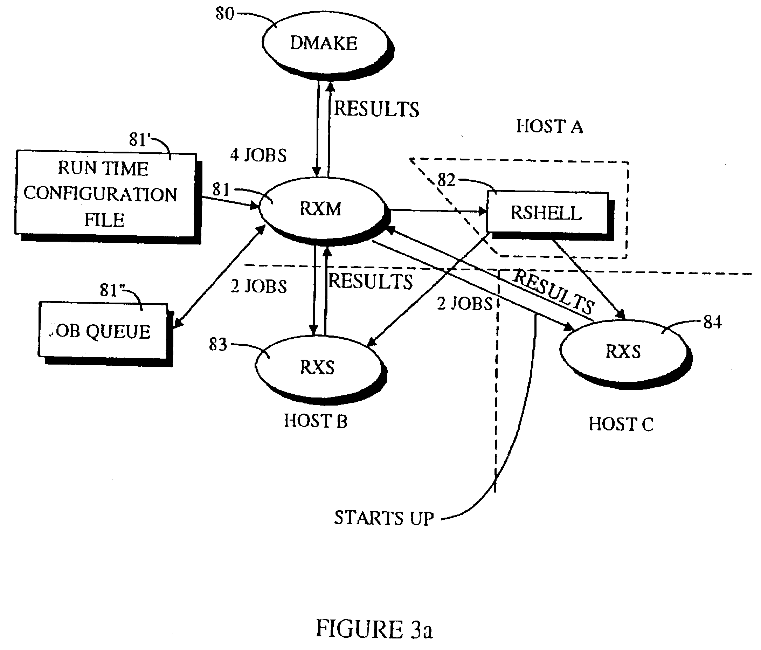

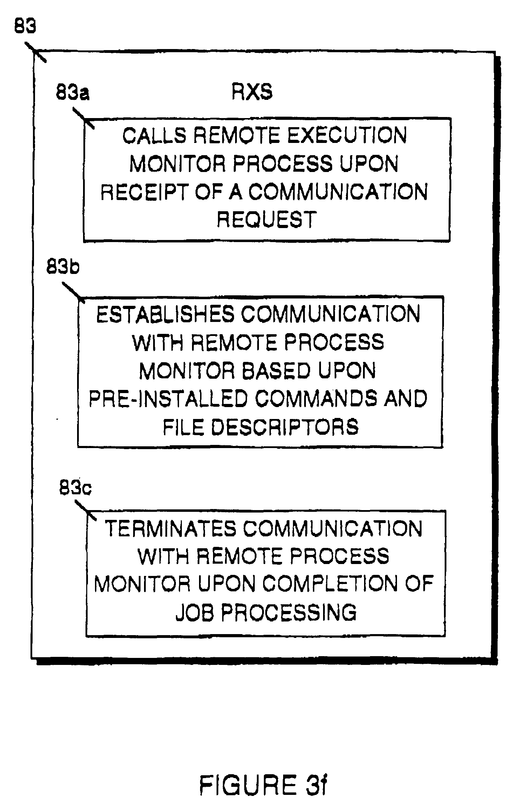

Figure 3a shows the architecture of a distributed make system and method according to one embodiment of the present invention. In particular, a dmake process 80 processes a make file 80b to identify make jobs which can be processed in parallel and sends groups of such jobs to a separate monitor process 81 forked from the dmake process 80. Monitor process 81 invokes rsh commands first and second times to establish respective first and second remote job execution processes in hosts B and C through fork of corresponding rsh processes 82 which communicate with corresponding remote shell daemons in nodes B and C in turn to establish first and second remote execution processes, respectively 83 and 84. Remote execution processes 83 and 84 process jobs received from monitor process 81 as described below in connection with Figure 3f. According to one embodiment of the present invention, monitor process 81 is a child process of dmake process 80. Monitor process 81 is created by forking (i.e., copying) parent dmake process 80. Fork is a UNIX system call (i.e., a request for operating system services) by which a parent process copies itself. Monitor process 81 distributes groups of jobs which can be executed in parallel, according to one embodiment of the present invention, among remote execution processes 83 and 84. Distribution can be to a local job execution process as well.

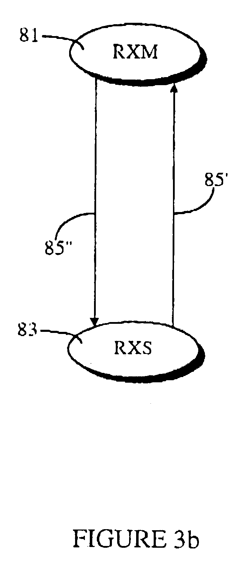

Figure 3b shows the architecture of a distributed make system and method according to a further embodiment of the present invention. According to the particular architecture, dmake process 80 runs dmake code 80a with make file 80b to produce groups of jobs which can be parallel processed at distributed nodes and are sent to monitor process 81. According to the present embodiment, software for respective execution processes 83, 84 has been pre-installed and booted in respective hosts B and C to permit pipe communication between respective data processing nodes 30b and 30c and monitor process 81. According to the present invention, execution processes 83 and 84 are started by a message from monitor process. The pre-installed code in nodes 30b and 30c is configured to monitor a well-known port for a message which starts an associated server process in each of nodes 30b and 30c. The local monitor and remote server processes are connected for interprocess communication, according to a separate embodiment, with pipes or UNIX domain sockets.

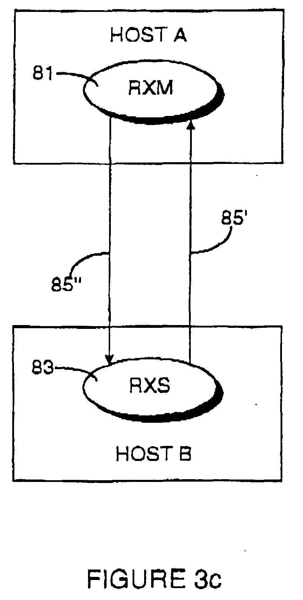

Figure 3c is a diagram of the architecture of pipe communications between a monitor process 81 on host A and a server or execution process 83 on host B. As shown in Figure 3c, communication between the processes is accomplished over first and second pipes, respectively 85' and 85''. According to the present invention, rxm receives the results of dmake jobs through a first pipe 85'. Monitor process 81 distributes groups of jobs to remote host 13. Two pipes 85' and 85'' are connected between monitor and execution processes 81 and 83 to permit reading and writing of information therebetween including jobs and job processing results. According to one embodiment of the present invention, pipes 85' and 85'' are established by monitor process 81, exercising an exec "rsh 〈remote host〉 rxs" The command rsh starts a temporary local host process which sends a message to the remote shell daemon in host B which is a specified argument of the rsh command. The message to the remote shell daemon further specifies by argument in the rsh command that a remote job execution process "rxs" be started on the remote server. If the rsh process fails in communicating with the remote shell daemon, monitor process 81 will not use the particular failing remote host for job distribution. If, on the other hand, the rsh process succeeds, monitor process will maintain a persistent connection for job distribution, execution and reporting with successful remote hosts. According to the present invention, once a remote execution process 83 is in operation at a remote host (*i*.*e*., host B), remote execution process 83 will send an acknowledgement to monitor process 81 through pipe 85', telling it to start sending jobs for execution. Remote process 83 loops and listens at a well-known port to which its first pipe 85'' is connected for dmake jobs from monitor process 81.

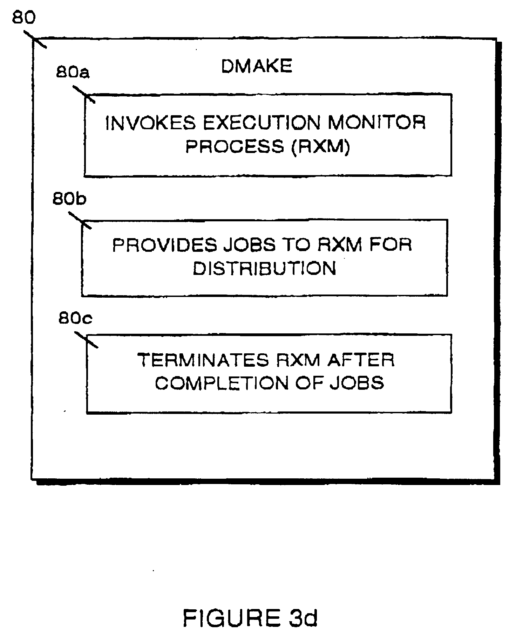

Figure 3d is a diagram of the functional architecture of distributed make, *i*.*e*., dmake, according to the present invention. In particular, dmake code 80 includes monitor process invocation code 80a for starting and implementing an execution monitor process (rxm). Dmake code 80 further includes job distribution code 80b by which dmake provides jobs to monitor process 81 for distribution to remote data processing nodes. Dmake code 80 further includes termination code 80c which terminates monitor process 81 after completion of the jobs at the remote data processing nodes. Monitor process invocation code 80a is configured to enable spawning and execution (fork and exec) of an execution monitor process. Dmake code 80 permits first and second open communication pipes (respectively for reading and writing) to be passed to the monitor process as arguments incident to the fork and exec. Job code 80b is configured to parse a makefile, build a dependency tree in view of the contents of the make file, which dmake source files need to be rebuilt, determine which rebuilding jobs can be processed in parallel, to determine the order of rebuilding, and to send groups of jobs to monitor process at a selected time for the monitor process to distribute concurrently. Termination code 80c is configured to listen on a selected input communication pipe connected to dmake monitor process for results from job processing. Listening according to termination code 80c continues until results are received for each job processed in the distributed group of jobs or an applicable error indication has been received. Once results have been received for a group of targets, a determination is made whether to exit or to proceed with distribution of a next group of jobs for rebuilding software executables which have had their component files modified as incident to maintenance or revision.

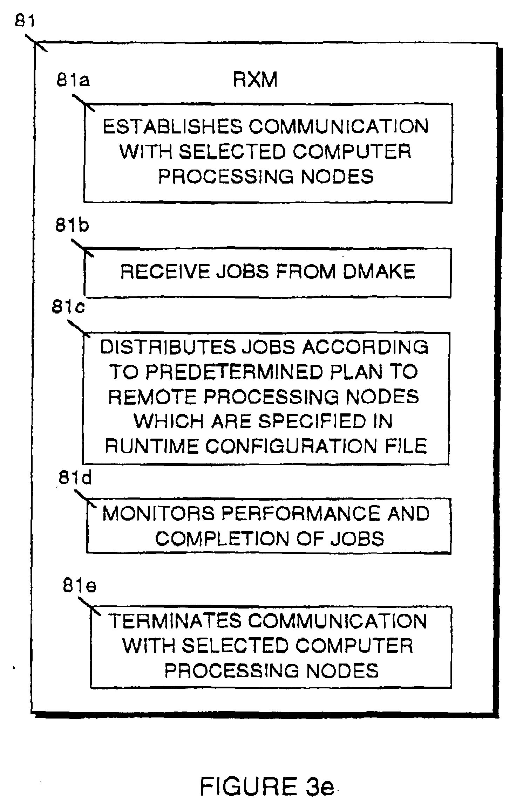

Figure 3e is a diagram of the functional architecture of remote execution monitor (rxm) process software code according to the present invention. In particular, rxm code 81 includes communication code 81a which establishes communication with selected data processing nodes in a computer network. Rxm code 81 further includes job code 81b which governs the receipt of jobs from dmake process at run-time. Rxm code 81 further includes distribution code 81c which implements distribution of jobs according to a predetermined plan to remote processing nodes specified in a runtime configuration file. Rxm code 81 further includes monitor code 81d to monitor performance and completion of jobs. Rxm code 81 further includes termination code 81e which permits termination of communication with the selected remote computer processing nodes. Communication code 81a is configured to enable communication with selected remote or local compiler processing nodes to which jobs are distributed. The code particularly permits creation of first and second pipes to be established with each computer processing node to which jobs are to be distributed. The first pipe is to be assigned to read information and the second pipe is assigned to write information to the connected compiler processing node. Job code 81b is configured to enable receipt of jobs produced during dmake processing through a pipe joining the dmake process and the remote monitor process, by providing the monitor process with a message indicating which hosts can be used by dmake for job distribution. According to job code 81b, the monitor process listens at a well-known port on a pipe joining it to dmake for jobs to be distributed. Distribution code 81c enables monitor process to parse a runtime configuration file containing groupings and lists of hosts available for job distribution. Distribution code 81c is used to distributed jobs received from a dmake process in predetermined allotments according to plan to particular data processing nodes. According to one embodiment, the selected data processing nodes are remotely located from the local host selected. According to another embodiment, a local host can receive distributed jobs. Monitor code 81d enables a remote monitor process persistently to listen on pipes to selected job processing nodes performing distributed jobs, for job processing result messages providing status on the processing of distributed jobs. Job processing results are transferred by the monitor process to the dmake process. Termination code 81e terminates operation of the monitor process and communications with the remote data processing nodes when the dmake process exits from further processing.

Figure 3f is a diagram of the functional architecture of monitor process software according to the present invention. In particular, execution process software 83 includes calling code 83a used for responding to a message from a monitor process upon receipt of a communication request. Execution process software 83 includes communication code 83b which, according to one embodiment, permits establishment of communication with a remote process monitor based upon pre-installed commands and file descriptors. Execution process software 83 includes termination code 83e which permits termination of communication with a monitor process upon completion of job processing. Calling code 83a more particularly enables a remote server process to send an acknowledgement to a remote monitor process through a pipe connected to the remote monitor process that it is ready to receive a distribution of allotted jobs. Communication code 83b particularly enables a remote server process to establish interprocess communication with an associated monitor process. To enable such communication, separate installation in each remote host of file descriptors identifies the host in which dmake is running. Termination code 83c terminates operation of remote server execution processes and communication with an associated monitor process when the monitor process exits.

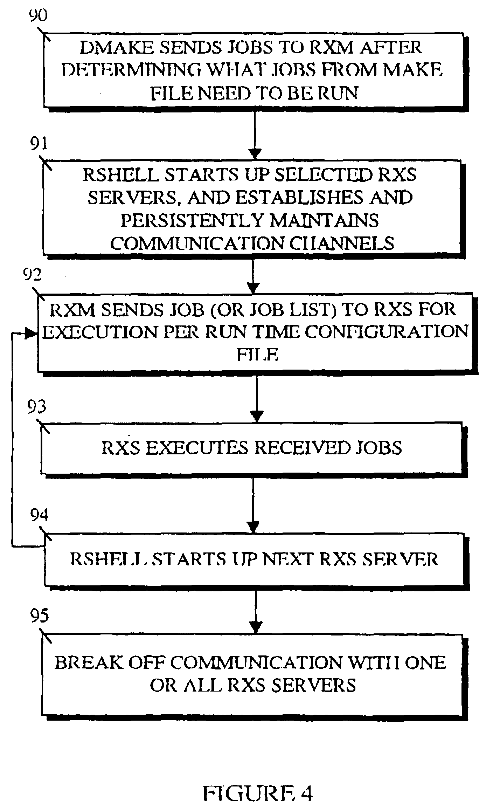

Figure 4 is a flow chart of a dmake method according to the present invention. In particular, a dmake process according to the present invention sends 90 dmake jobs determined by a make file to an associated monitor process for distribution to distributed data processing nodes. The dmake software operating through the monitor process invokes the UNIX rsh command repeatedly to start up 91 associated remote execution processes and establishes and persistently maintains communication channels between the remote execution processes and the associated dmake monitor process on the local host from which the dmake jobs are distributed. The monitor process sends make file determined jobs to execution processes established at remote data processing nodes specified in a runtime configuration file. The remote execution processes execute 93 the jobs received. The dmake code running the monitor process repeatedly executes an rsh command, initiating an rshell process locally which communicates with a shell daemon on targeted remote data processing nodes to start up 94 successive remote execution server processes for job execution. The process of sending additional jobs for execution is then repeated with each successive remote execution server process. After all jobs have been completed, communications are broken off 95 with the respective remote execution server processes.

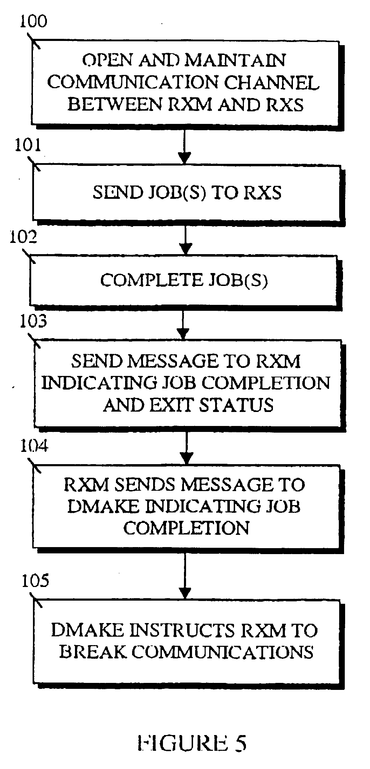

Figure 5 is a flow chart of a further method according to the present invention. In particular, communications are opened and maintained 100 between associated monitor and remote execution processes. Then, particular dmake jobs are sent 101 from the monitor process associated execution processes. Thereafter, the jobs which have been sent are completed 102 according to specification, followed by a message sent 103 to monitor process from the execution process, confirming job completion and exit status. The monitor process then sends 104 a message to its parent dmake process indicating completion of assigned jobs. Finally, the dmake process instructs 105 the monitor process to terminate communications.

## Claims

1. A method of processing make jobs to a plurality of data processing nodes, including:
running a monitor process on a selected data processing node;
establishing at least one job execution process on corresponding separate data processing nodes for processing make jobs;
sending selected make jobs to the monitor process for distribution on said at least a single job execution process;
communicating between said monitor process and said at least a single job execution process; and
processing said selected make jobs.

2. The method according to claim 1, wherein each of said at least a single job execution process is a server process resident on a host remote from the data processing node running said monitor process.

3. The method according to claim 1, wherein said at least a single job execution process is established on said corresponding data processing nodes.

4. The method according to claim 1, further including determining make jobs for communication to said monitor process.

5. The method according to claim 4, including communicating a group of make jobs which can be processed in parallel, to said monitor process.

6. The method according to claim 5, including distributing make jobs in said group among said at least a single job execution processes.

7. The method according to claim 1, including reading a dmake configuration file to determine data processing nodes for job distribution.

8. The method according to claim 7, including determining a list of remote hosts for job distribution from said dmake configuration file.

9. The method according to claim 2, including receiving the results of processing selected make jobs.

10. The method according to claim 1, including establishing communication pipes between said monitor and job execution processes.

11. A computer program product, comprising:
a computer storage medium and a computer code mechanism embedded in the computer storage medium for distributed processing of make jobs on distributed data processing nodes, the computer program code mechanism comprising:
a first computer code device configured to establish a job monitor process on a first data processing node;
a second computer code device configured to establish a job execution process on at least a second data processing node;
a third computer code device configured to cause selected jobs to be sent to said job monitor process for distribution at said at least a second data processing node; and
a fourth computer code device configured to enable communications between a monitor process and said at least a second data processing node.

12. An apparatus for distributed processing of make jobs in a network of data processing nodes, including:
a first software module for distributing make jobs; and
it least a single software module for receiving selected make jobs.

13. A computer apparatus for initiating the processing of make jobs, comprising:
a first data processing system connectable to other data processing systems, said first data processing system being configured to identify make jobs and to organize the execution of particular make jobs in at least a single other data processing system.

14. The computer apparatus of claim 13 wherein said first data processing system is further configured to perform particular make jobs locally.

15. The computer apparatus of claim 13 wherein all said make jobs are distributed to another data processing system.
